# EUROPÄISCHE PATENTSCHRIFT

(11) **EP 0 331 159 B1**
(45) Veröffentlichungstag und Bekanntmachung des Hinweises auf die Patenterteilung: **25.08.1993**
(21) Anmeldenummer: 89103645.1
(22) Anmeldetag: 02.03.1989
(51) Int. Cl.: F16D 55/22, D06F 49/04, F16D 65/18

(54) **Bremsvorrichtung**
Braking device
Dispositif de freinage

(30) Priorität: 03.03.1988 DE 3806988
(43) Veröffentlichungstag der Anmeldung: 06.09.1989
(73) Patentinhaber: Stahlschmidt, Robert, D-33729 Bielefeld (DE)
(72) Erfinder: Stahlschmidt, Robert, D-33729 Bielefeld (DE)
(74) Vertreter: Hoefer, Theodor, Dipl.-Ing.

(56) Entgegenhaltungen:
- DE-C- 863 786
- DE-C- 867 838
- DE-C- 928 042
- US-A- 2 757 759
- US-A- 3 322 240

## Beschreibung

Die Erfindung betrifft eine Bremsvorrichtung für mit Bremsscheiben ausgestattete Elektromotoren, wie sie in Haushaltsgeräten, beispielsweise Zentrifugen, wie Wäscheschleudern oder in elektrischen Gartengeräte, wie Rasenmäher, Komposthäcksler oder dergleichen eingebaut sind, nach dem Oberbegriff des Anspruches 1.

Eine gattungsgemäße Bremsvorrichtung ist aus der DE-C-876 838 bekannt. Bei dieser bekannten Bremsvorrichtung soll zwar eine sichere Kontrolle des Stillstandes (Feststellung) der Bremsscheibe gewährleistet sein, was jedoch einen relativ hohen konstruktiven Aufwand erfordert. Denn es sind zwei Bowdenzüge vorgesehen, von denen einer für die Axialbewegung zur Bremsung und der anderen für die Radialbewegung zur Kontrolle des Stillstandes bzw. zur Verriegelung nötig ist.

Es ist daher Aufgabe der Erfindung, bei einer dem Oberbegriff des Anspruches 1 entsprechenden Bremsvorrichtung mit Scheibenbremse das Anlegen der Bremsbacken von der Bremsscheibe bei einfacher mechanischer Konstruktion in einfacher und sicherer Weise bei Erhöhung der Bremskraft jeder Bremsbacke und guter Kontrolle der stillstehenden Bremsscheibe möglich zu machen.

Die Lösung dieser Aufgabe erfolgt durch die Merkmale des Anspruches 1.

Eine derartige Ausbildung zeigt verschiedene Vorteile, innbesondere gestattet die Radialverschiebung der Bremsbacken an zusätlich axial verschwenkbaren Hebeln das Anbringen von ineinanderfassenden Auflaufkurven, die sowohl die Bremsstellung der Hebel als auch deren Löse-Stellung sicher festlegen.

Das Prinzip der Sicherung beruht auf dem Gedanken, daß zum Lösen der Bremse eine entgegen der Arbeitsdrehrichtung laufende Teildrehung erfolgen soll (muß),. die auch zum Entriegeln von Sicherungseinrichtungen benutzt werden kann. Durch die erforderliche Gegendrehrichtung ist Drehzahl "0" gewährleistet.

Weitere Merkmale ergeben sich aus den Unteransprüchen.

Auf der Zeichnung sind Ausführungsbeispiele der Erfindung dargestellt. Es zeigen:
- Fig. 1: einen senkrechten Schnitt durch das Gehäuse einer Wäscheschleuder mit Seitenansicht einer Schleudertrommel mit Antriebsmotor und Bremseinrichtung mit schematischer Dargestellung bei Motor-Stillstand mit geöffnetem Deckel;
- Fig. 2: eine Ansicht von unten auf die Bremsscheibe mit seitlicher Bremsbackendruckeinrichtung ;
- Fig. 3: eine vergrößerte Darstellung eines Teiles der in Fig. 2 dargestellten Bremsbackendruckeinrichtung entsprechend der Schnittlinie III-III in Fig. 2 bei gelösten Bremsbacken;
- Fig. 4: eine vergrößerte Darstellung eines anderen Teiles der Bremsbackendruckeinrichtung bei Anlage an eine Auflaufkurve in Bremsstellung der Bremsbackenscheiben entsprechend der Schnittlinie IV-IV in Fig. 2;
- Fig. 5: eine etwas vergrößerte schematische Darstellung eines abgefederten Druckhalters zum Halten eines in einem festen Rahmen verschiebbaren Haltekonus in Lösestellung der Bremsscheibe;
- Fig. 5a: eine schematische Darstellung der etwas abgehobenen Bremsbacken von der Bremsscheibe;
- Fig. 6: dieselbe schematische Darstellung des Druckhalters in seiner extremen Lösestellung;
- Fig. 6a: eine schematische Darstellung der weit abgehobenen Bremsbacke;
- Fig. 7: dieselbe Darstellung des Druckhalters beim Bremsen der Bremsscheibe mittels der Bremsbacken;
- Fig. 7a: eine schematische Darstellung der auf der Bremsscheibe fest auflieg den Bremsbacken;
- Fig. 8: eine schematische Darstellung einer abgeänderten Ausführungsform eines mit Einspannhaltestreifen ausgestatteten Druckhalters in Seitenansicht im Querrahmen;
- Fig. 9: einen Querschnitt durch denselben Querrahmen gemäß der Schnittlinie V-V in Fig. 8;
- Fig. 10: eine schematische Darstellung mit Teil-Seitenansicht einer abgeänderten Ausführung der Bremseinrichtung in extremer Lösestellung;
- Fig. 11: eine schematische Teildarstellung der in Fig. 10 gezeigten Ausführung in lösender Stellung der Bremsbacken von den Bremsscheiben;
- Fig. 12: eine schematische Darstellung derselben Ausführung in abgebremster Stellung der Bremsscheibe;
- Fig. 13: eine Schematische Darstellung einer abgeänderten Ausführung eines Druckhalters;
- Fig. 14: eine schematische Seitenansicht der Halterung der Bremsbackenhebel in geänderter Ausführung.

Das Gehäuse (10) einer Wäscheschleuder nimmt eine mit senkrechter Drehachse angeordnete zylindrische Schleudertrommel (11) auf, an deren oberer Stirnseite eine Einfüllöffnung (12) mit angelenktem Deckel (13) vorgesehen ist.

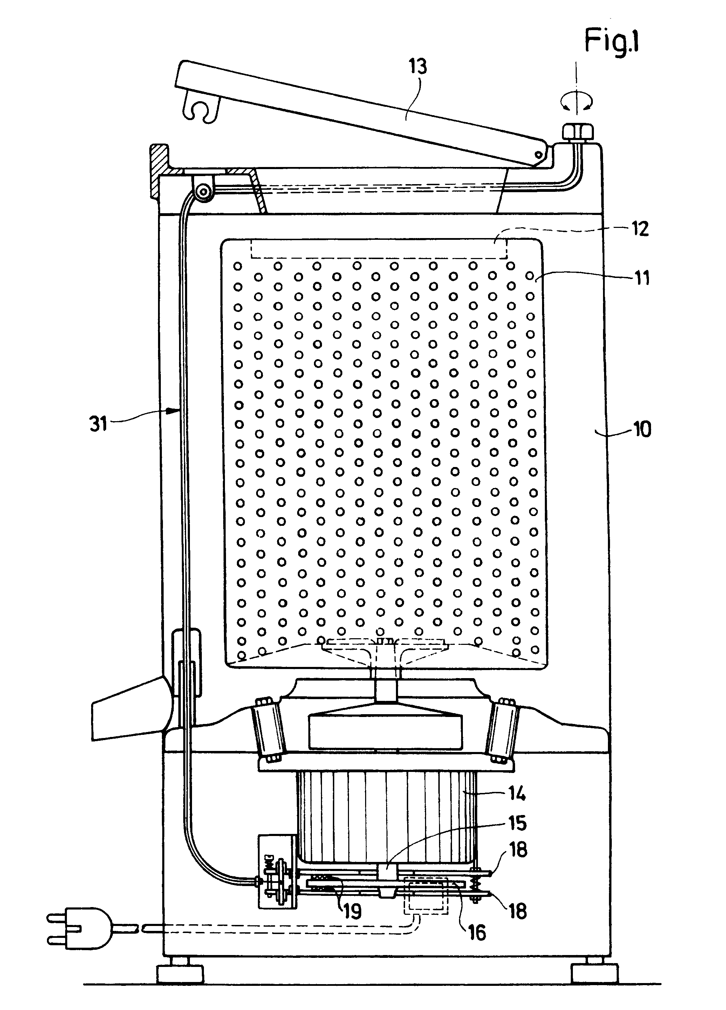

An der unteren Stirnseite der Schleudertrommel (11) ist ein Antriebsmotor (14) mit senkrechter Welle (15) befestigt, an deren freiem Ende eine Bremsscheibe (16) befestigt ist (Fig. 1).

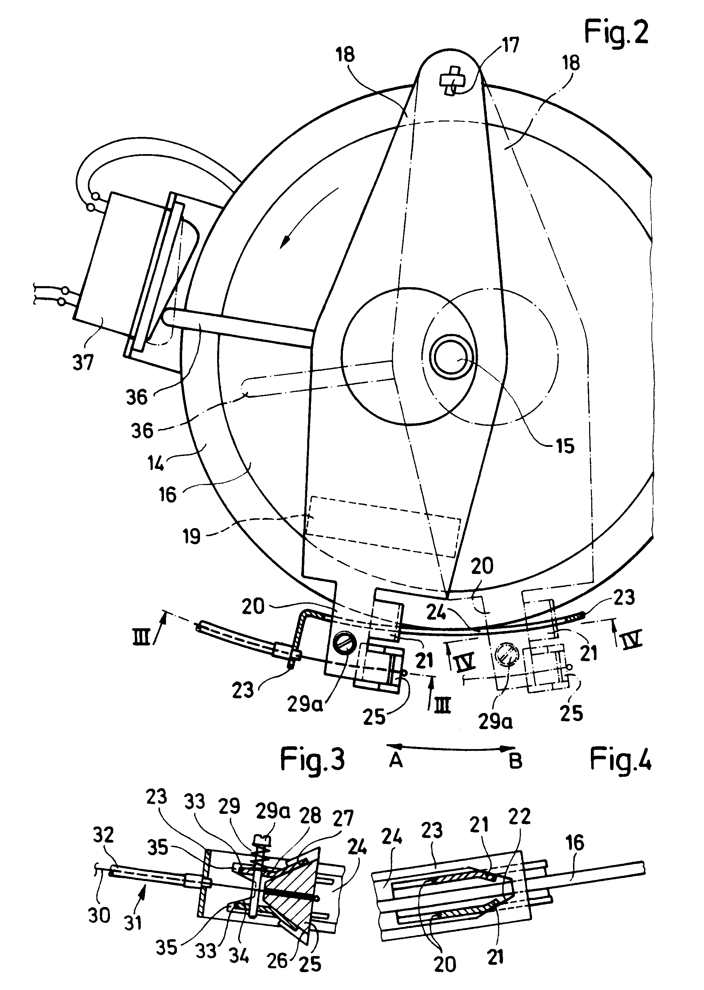

An jeder Oberfläche dieser kreisrunden Bremsscheibe (16) ist an einer exzentrischen, fest im Gehäuse verankerten Schwenkachse (17) jeweils ein starrer Bremsbackenhebel (18) schwenkbar gelagert, der im äußeren Bereich der Bremsscheibe (16) auf deren Oberfläche jeweils eine Bremsbacke (19) derart trägt, daß die Bremsbacke (19) sich axial bewegend an die Oberfläche der Bremsscheibe (16) anlegen kann (Fig.2).

Über den Rand der Bremsscheibe (16) hinaus ist der Bremsbackenhebel (18) mit einer starren Zunge (20) verlängert, an der in deren Mittelbereich eine vorzugsweise abgewinkelte Kurve eines Bremsbackenhalters (21) vorsteht, der zum Abbremsen und Festhalten in der Bremsstellung mit seiner außenseitigen Kurve sich gegen eine Auflaufkurve (22) anlegt, die an einem gegenüber dem Antriebsmotor (14) feststehenden Querrahmen (23) zu dessen freien inneren Bewegungsraum 24 aufgeweitet ist. Diese Bremsbackenhalterkurve (21) läuft zum Abbremsen der Bremsscheibe (16) in diese Auflaufkurve (22) ein und hält diese dadurch unter starkem Reibungschluß (Axialbewegung) fest.

Im äußeren Bereich der Zunge (20) ist ein Haltekonus (25) befestigt, der mit seinen konischen Flächen (26) in eine Haltekurve (27) eines beweglichen Druckhalters (28) zum Halten der Bremseinrichtung in Brems-Lösestellung einfaßt.

Diese nach außen abgewinkelte Haltekurve (27), die maulartig sich öffnet, ist mittels einer Druckfeder (29) und einer zusammenwirkenden Verbindungsschraube (29a) abgefedert. Diese Haltekonus (25) nimmt verschiedene Stellungen, je nach Schaltstellung des Motors (14) innerhalb des Bewegungsraumes (24) ein.

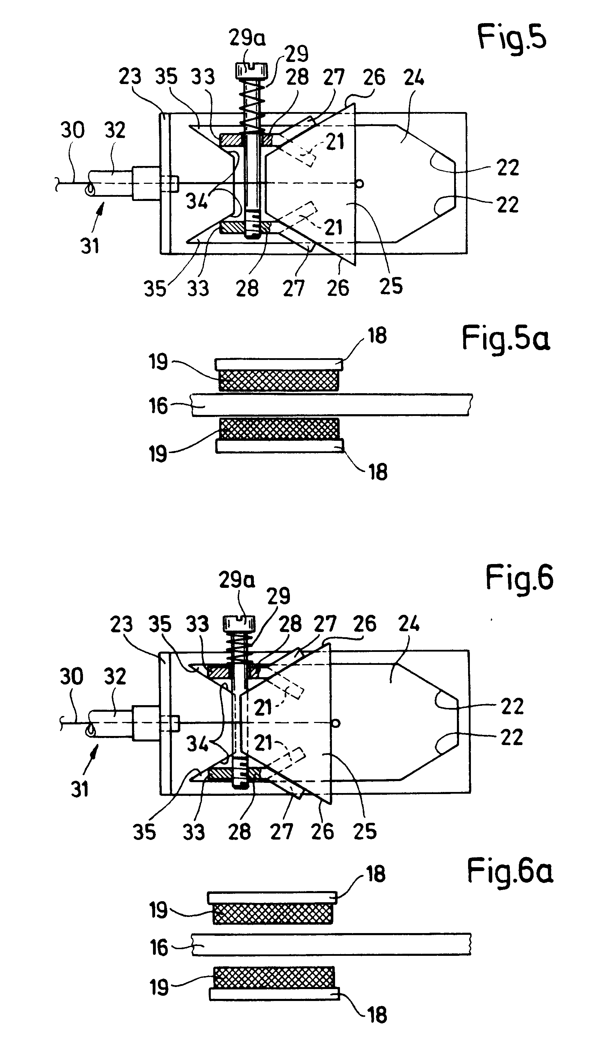

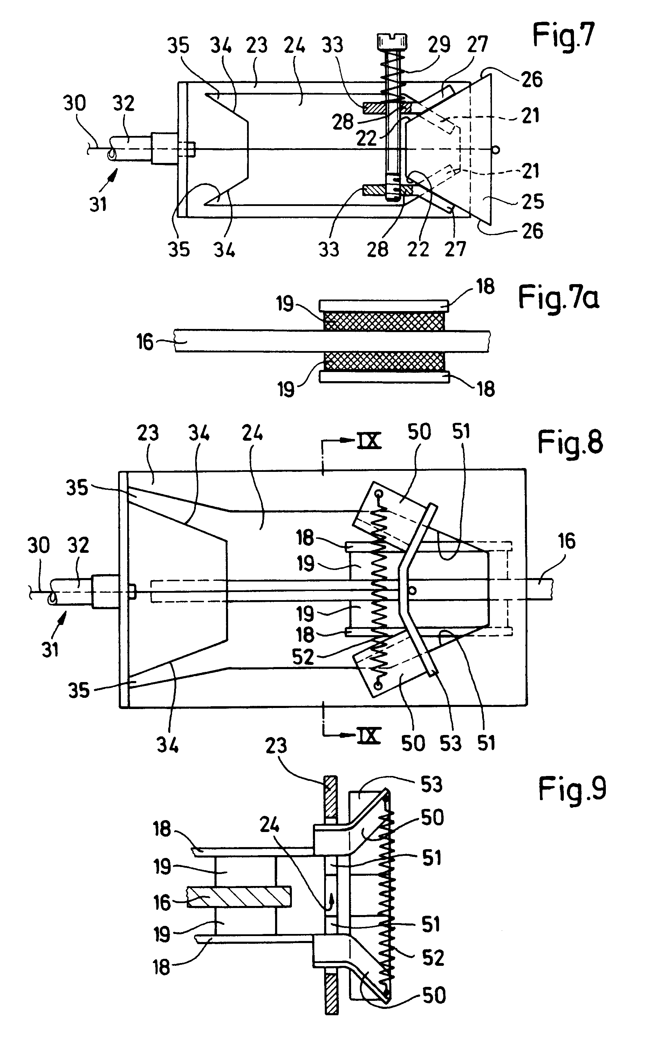

In Fig. 5 bis 7 sind die einzelnen Stellungen des Druckhalters (28) zwischen extremer Lösestellung (Fig.6), in einer mittleren Lösestellung (Fig.5) und in Abbremsstellung der Bremsbacken (19) ersichtlich. (Fig.7)

Bei der Stellung gemäß Fig. 5 wird der Antriebsmotor (14) mittels des sich in Pfeilrichtung A bewegenden Schaltstiftes (36) eingeschaltet bzw. wird ausgeschaltet, wenn sich der Druckhalter (28) in Pfeilrichtung B zur Bremsstellung bewegt.

Zum Lösen der Bremsbacke (18) wird mittels einer geeigneten Verstelleinrichtung (nicht dargestellt) im Bereich des Deckels (13) oder an der Vorderfront der Wäscheschleuder die Drahtseele (30) eines Bowdenzuges (31) angezogen, so daß der Haltekonus (25), an dem das untere Ende des Bowdenzuges (31) befestigt ist, sich in entgegengesetzter Richtung bewegt und in die sich öffnende Haltekurve (27) innerhalb des Bewegungsraumes (24) einlegt (Fig.6 und 5).

Dieser Haltekonus schiebt sich dazu mit seinen konischen Flächen (26) zwischen abgewinkelte Flächen des Druckhalters (28) und sowohl der an der Zunge (20) befestigte Druckhalter (28) als auch die Bremsbackenhalterkurve (21) bewegen sich bei weiterem Zug an der Drahtseele (30) des Bowdenzuges (31) in Richtung einer weiteren, im feststehenden Rahmen (23) vorstehenden Konusfläche (34).

Je mehr der Haltekonus (25) gezogen wird, umsomehr öffnet sich entgegen dem Druck der Druckfeder (29) der Druckhalter (28) und dessen entgegengesetzte freie Enden (33) gleiten in die zwischen Rahmen (23) und Konusfläche (34) gebildeten Nuten (35), so daß damit wieder der Druckhalter (28) etwas geöffnet wird und der Haltekonus (25) noch weiter in Richtung auf die Konusflächen (34) gleitend sich einspannt.

Wird also die Drahtseele (30) des Bowdenzuges (31) angezogen, so bewegt sich der Bremsbackenhebel (18) aus der Auflaufkurve (22) (vergl.Fig.2 und 4) nach links. Damit lösen sich die Bremsbacken (19) von der Bremsscheibe (16), so daß die Bremsscheibe (16) und damit die Motorwelle (15) nicht mehr abgebremst ist und frei laufen kann. Dadurch wird beispielsweise bewirkt, daß durch einfaches Drehen der Schleudertrommel (11) (beim Be- und Entladen) ein Einschalten des Antriebsmotors (14) unmöglich ist.

Mit dem weiteren Anziehen der Drahtseele (30) des Bodenzuges (31) wird der Bremsbackenhebel (18) in die Lösestellung gezogen, so daß ein Schaltstift (36) einen außerhalb der Bremsscheibe (16) angeordneten M Motorschalter (37) einschaltet und damit der Antriebsmotor (14) anläuft.

In der linken Stellung (Fig.2) des Bremsbackenhebels (18) hat somit der Schaltstift (36) den Motorschalter (37) eingeschaltet. Mit der Bewegung des Bremsbackenhebels (18) in die Rechtsstellung (Fig.4) entfernt sich der Schaltstift (36) von dem Motorschalter (37), so daß sich dieser ausschaltet.

Durch den beweglichen Druckhalter (28) und dessen einspannende Anlage an den Konusflächen (34) des feststehenden Querrahmens (23) wird der Bremsbackenhebel (18) sicher festgehalten.

Bei dem vorbeschriebenen Ausführungsbeispiel sind zwei übereinanderliegende Bremsbackenhebel (18) mit jeweils einer Bremsbacke (19) vorgesehen. Der Pfeil A-B zeigt die wechselweise Bewegungsrichtung des Bremsbackenhebelspaares (18) von der Bremsstellung B (rechts) in die Lösestellung A (links).

Zum Einfahren der Bremsdruckeinrichtung in die Bremsstellung wird die Drahtseele (30) des Bowdenzuges (31) etwas aus ihrer Zugspannung nachgelassen, so daß sich der abgefederte Druckhalter (28) aus seiner Einspannung an den Konusflächen (34) löst. Damit kann sich die Zunge (20) etwas zurück gegen die Bremsscheibe (16) bewegen, so daß die Bremsbacke (19) wieder Berührung mit der sich noch drehenden Bremsscheibe (16) bekommt und von dieser mitgenommen wird. Bei dieser Mitnahme wandert die Bremsbackenhalterkurve (21) sofort in Richtung der Auflaufkurve (22), die dann unter Reibungsschluß die Zunge (20) fest einklemmt und damit die Bremsscheibe (16) sicher abbremst.

Es liegt im Rahmen der Erfindung, auch nur einen Bremsbackenhebel (18) vorzusehen, dem dann nur ein Teil der Bremsbackendruckeinrichtung zugeordnet ist.

Vorteilhaft ist jedoch bei Verschmutzungsgefahr die Verdoppelung der Sicherheit durch Wahl einer Zweibackenbremse. Außerdem kann bei dem gegengerichteten Anpreßdruck die Bremscheibe dünner dimensioniert sein.

Derartige Bremsvorrichtungen können in vorteilhafter Weise mit einer Verriegelungseinrichtung für den Deckel o.dgl. zusammenwirken, die gewährleistet, daß der Antriebsmotor (14) nicht anlaufen kann, wenn die Verriegelungseinrichtung gelöst ist.

Diese Verriegelungseinrichtung hat nämlich z.B. bei einer Wäscheschleuder die Aufgabe, daß der Deckel am Gehäuse nur dann geöffnet werden kann, wenn der Antriebsmotor (14) und die Schleudertrommel (11) vollständig stillstehen.

Andererseits kann der Antriebsmotor (14) und damit auch die Schleudertrommel nur anlaufen, wenn die Verriegelungseinrichtung ordnungsgemäß mit einfacher oder doppelter Sicherung gegen unbeabsichtigtes Lösen eingelegt ist.

Beim Ausführungsbeispiel gemäß Fig. 8 und 9 ist ein im Rahmen (23) hin- und herverschiebbarer Druckhalter (50) mit zwei sich gegenüberliegenden und zu dem Haltekonus (53) im Rahmen (23) vorstehenden abgewinkelten Haltestreifen (51) ausgestattet, die mittels einer Zugfeder (52) gegeneinander verspannbar sind.

An diesen Druckhalter (50) legt sich ein konvex abgewinkelter, in seinem Mittelbereich die Drahtseele (30) des Bowdenzuges (31) haltender Haltekonus (53), so daß bei dessen Zug der Druckhalter ( 50) mit seinen Haltestreifen (51) vom Haltekonus (51) gezogen wird, wobei - diesen seitlich umfassend - damit die Haltestreifen (52) (in gesicherter Lösestellung der Bremsbacken 19) sich mit dem Haltekonus (53) verspannen.

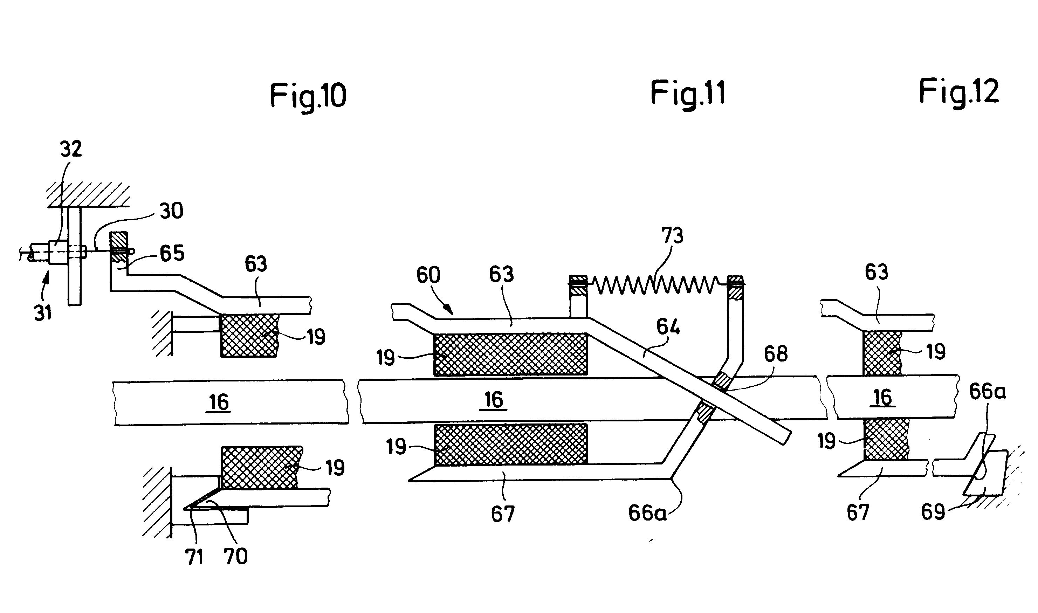

Bei einer weiter abgeänderten Ausführungsform gemäß Fig. 10-12 ist an dem bremsbackenhebel (60) mit der daran befestigten Bremsbacke (19) auf einer Seite der Bremsbacke (19) eine nach außen außerhalb der Bremsscheibe (16) abgewinkelte schmalere Zunge (63) befestigt, die einenends einen zur Mitte der Bremsscheibe (16) gerichteten Hältestreifen (64) trägt und anderenends an einer Abwinklung (65) die Drahtseele (30) eines Bowdenzuges (31) angeschlagen ist.

Der auf der anderen Seite der Bremsscheibe (16) ebenfalls radial um die Schwenkachse (17) verschwenkbare Bremsbackenhebel (19) trägt ebenfalls außerhalb der Bremsscheibe (16) einen breiteren Haltestreifen (67), der einenends ebenfalls zur Mitte der Bremsscheibe (16) abgewinkelt ist und mittig darin einen Schlitz ( 68) aufweist, durch welchen das freie Ende des abgewinkelten oberen Haltestreifens (64) hindurchgeführt ist.

Die sich zunächst noch drehende Bremsscheibe (16) nimmt zu ihrem Abbremsen den unteren Haltestreifen (66) mit, so daß dieser sich mit seiner Kante (66a) an eine am Motorgehäuse befestigte Auflaufschräge (69) anlegt und daran entlanggleitend die untere Bremsbacke (19) gegen die Fläche der Bremscheibe (16) fest anpreßt (Fig. 12). Gleich-zeitig wird dabei durch die Verhinderung einer weiteren Schwenkbewegung des Haltestreifens (66a) der obere Haltestreifen (64) durch weiteres Verschwenken und Eintauchen in den Schlitz (68) nach unten gedrückt, so daß die Zunge (63) die obere Bremsbacke (19) ebenfalls gegen die andere Fläche der Bremsscheibe (16) drückt, so daß diese Bremsscheibe (16) sicher abgebremst ist.

Zum Lösen der beiden, sich gegenüberliegenden Bremsbacken (19) wird die Drahtseele (30) des Bowdenzuges (31) und damit auch die Abwinklung (65) des Haltestreifens (64) in entgegengesetzter Richtung angezogen, so daß sich die Kante (66a) des unteren Haltestreifens (67) von der Auflaurschräge (69) löst und eine weitere einseitige Einlaufschräge (70) an der anderen Seite des unteren Haltestreifens (67) sich in eine feste Schrägnut (71) gleitend einzieht und damit die untere Bremsbacke (19) (vgl.Fig.11 und 10) die Bremsscheibe (16) freigebend abhebt.

Dabei verschwenkt sich die obere Zunge (63) weiter; ihr Haltestreifen (64) zieht sich etwas aus dem Schlitz (68) zurück und hebt damit ebenfalls die obere Backenbremse (19) von der Bremsscheibe (16) ab (vgl.Fig.11 und 10).

Damit schaltet der Schaltstift (36) gleichzeitig den Schalter (37), so daß der Antriebsmotor (14) frei läuft.

Die Eintauchbewegung der beiden sich kreuzenden Haltestreifen (67, 63) wird mittels einer sie verbindenden Zugfeder (72) unterstützt.

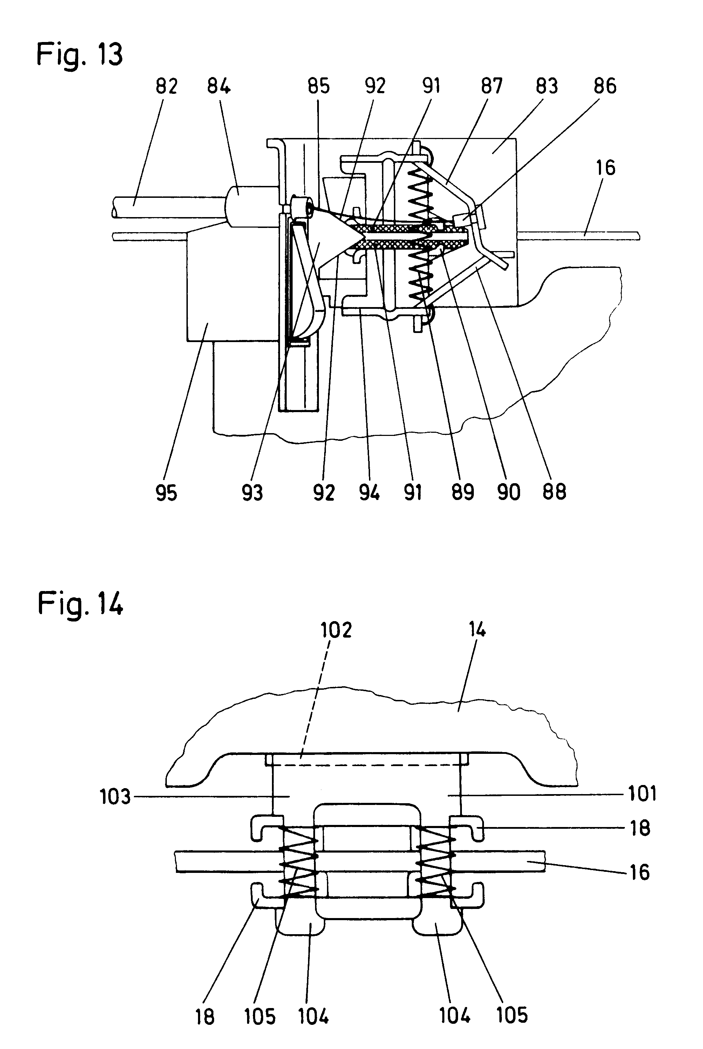

Bei der in Fig. 13 dargestellten abgeänderten Ausführungsform ist mit (83) ein feststehender Rahmen bezeichnet, in den ein Bowdenzug (82) mündet, dessen bremsseitiges Ende in einer Haltemuffe (84) gelagert ist. Aus dieser Haltemuffe (84) tritt die Drahtseele (85) des Bowdenzuges hervor und ist mit ihrem freien Ende mittels einer Halterklemme (86) an den gelenkig ineinandergreifenden Haltestreifen (87 und 88) angeschlagen.

Die beiden Haltestreifen (87, 88) stehen unter der Zugwirkung einer Zugfeder (89), die auf gegenüberliegenden Seiten mit ihren freien Enden an jeweils einem Bremsbackenhalter (Bremsbackenhaltekurve) (90) angelenkt ist.

Die beiden sich gegenüberliegenden Bremsbacken (91) liegen beidseits der zu bremsenden Bremsscheibe (16).

Beim Freigeben der Bremsscheibe (16) stehen die Konusflächen (92) eines an dem feststehenden Rahmen (83) gegen die Bremsbacken (91) vorstehenden Haltekonus (93) außerhalb des Zwischenraumes zwischen den beiden Bremsbacken (91).

Ebenso wie bei den vorbeschriebenen Ausführungen gem. Fig. 1 bis 12 nehmen diese Bremsbacken (91) verschiedene Stellungen ein je nach Schaltstellung des Motors innerhalb seines Bewegungsraumes.

Bei der in Fig. 13 dargestellten Stellung ist die Drahtseele (85) des Bowdenzuges (82) nicht angezogen, so daß die unter Federzug stehenden Bremsbacken (91) die Bremsscheibe (16) festhalten.

Zum Lösen der Bremsbacken (91) wird die Drahtseele (85) des Bowdenzuges (82) angezogen, wobei sich die Konusflächen (92) zwischen die Bremsbacken (91) schieben und diese auseinanderspreitzen, so daß die Zugfeder (89) sich spannt.

Wird die Drahtseele (85) des Bowdenzuges (82) losgelassen, so zieht die Zugfeder (89) die Haltestreifen (87, 88) und damit auch die Bremsbackenhaltekurven (90) derart zusammen, daß die Bremsbacken (91) wieder auf der Bremsscheibe (16) aufliegen, da keine Konusflächen (92) mehr dazwischenliegen.

An der Bremsbackenhaltekurve (90) ist untenseitig ein Schaltstift (94) befestigt, der dann den Motor mittels des Schalters (95) einschaltet.

Die Grundelemente auch dieser Ausführung stimmen in etwa mit den Grundelementen der vorbeschriebenen Ausführungen überein.

In Fig. 14 ist eine abgeänderte Ausführung der Aufhängung der starren Bremsbackenhebel schematisch in einer Seitenansicht dargestellt.

In Fig. 14 ist eine weitere abgeänderte Ausführung dargestellt. Auf der Unterseite des Gehäuses des Elektromotors (14) ist ein Einhängewinkel (101) angeordnet, der aus einem abgewinkelten Blech besteht, dessen parallel zur Unterseite des vorgenannten Gehäuses verlaufender Schenkel (102) mittels Nieten, Schrauben o. dgl. daran befestigt ist.

Sein nach unten vorstehender Schenkel (103) hat zwei im Abstande voneinander stehende Schenkel (104), die jeweils von einer Druckfeder (105) umgeben sind.

Diese Druckfedern (105) halten einen oberen und einen unteren Bremsbackenhebel (18) im Abstand voneinander, die beidseits der Bremsscheibe (16) gelagert und mit ihren Bremsbelägen gegen die Oberflächen der Bremsscheibe (16) gerichtet sind.

Eine derartige doppelt abgefederte Lagerung der Bremsbackenhebel (18) zeigt den Vorteil, daß jeder Bremsbackenhebel (18) in gewissen Grenzen eine Bewegungsfreiheit nicht nur radial, sondern senkrecht zu seiner Längsfläche aufweist, um damit neben dem Anheben (Lüften) und Auflegen der Bremsbacken auf die Bremsscheibe den Unebenheiten der Bremsscheibe folgen zu können und damit nachteilige Geräusche vermieden werden.

## Patentansprüche

1. Bremsvorrichtung für einen Elektroantriebsmotor (14) für Haus- und Gartengeräte oder dergleichen
- mit einer Bremsscheibe (16),
die auf einer Welle (15) des Elektroantriebsmotors (14) befestigt ist;
- mit zumindest einer Bremsbacke (19),
die auf einem um eine an einem Motorgehäuse (10) festgelegte, senkrecht zur Oberfläche der Bremsscheibe (16) stehende Schwenkachse (17) schwenkbaren Bremsbackenhebel (18) in etwa parallel zur Oberfläche der Bremsscheibe (16) angeordnet ist, und
die durch eine in Axialrichtung der Welle (15) erfolgende Bewegung an die Bremsscheibe (16) anlegbar ist; dadurch gekennzeichnet,
- daß außerhalb der Bremsscheibe (16) ein feststehender Rahmen (23) angeordnet ist, der ein Führungsteil mit einer Auflaufkurve (22) aufweist, und
- daß der Bremsbackenhebel (18) einen Bremsbackenhalter (21) mit abgewinkelterm Einlaufbereich aufweist, der zur Abbremsung der Bremsscheibe (16) in die Auflaufkurve (22) des Rahmens (23) einläuft.

2. Bremsvorrichtung nach Anspruch 1, dadurch gekennzeichnet, daß die Auflaufkurve (22) des Führungsteils und der Einlaufbereich des Bremsbackenhalters (21) jeweils in einem stumpfen Winkel in Bezug auf eine Senhrechte zur Bremsscheibe (16) verlaufen.

3. Bremsvorrichtung nach einem des Ansprüche 1 oder 2, dadurch gekennzeichnet, daß das Führungsteil mit seiner Auflaufkurve (22) fest im Innenraum (24) des am Motorgehäuse (10) festgelegten Rahmens (23) vorgesehen ist.

4. Bremsvorrichtung nach einem der Ansprüche 1 bis 3, dadurch gekennzeichnet, daß unter Festlegung des Bremsbackenhebels (18) in Lösestellung der Bremsbacken (19) an dem Rahmen (23) mit Abstand von der Auflaufkurve (22) ein Haltekonus (34) angeordnet ist, der mit einem im Rahmen (23) beweglichen, an dem Bremsbackenhebel (18) befestigten Druckhalter (28) zusammenwirkt.

5. Bremsvorrichtung nach Anspruch 4, dadurch gekennzeichnet, daß der im Innenraum (24) des festen Rahmens (23) bewegliche Druckhalter (28, 50) mit einem Haltekonus (25) zusammenwirkt, der an einem Bowdenzug (31) einer Betätigungseinrichtung angeschlagen ist und der sich zwischen mittels einer Feder (29) abgefederte Haltekurven (27) des Druckhalters (28) einlegt.

6. Bremsvorrichtung nach einem der Ansprüche 4 oder 5, dadurch gekennzeichnet, daß sich der Druckhalter (28, 50) mit an den Haltekurven (27, 51) vorstehenden Enden (33) in eine Nut (35) zwischen einer im Rahmen (23) vorstehenden Konusfläche (34) und dem feststehenden Rahmen (23) einspannt.

7. Bremsvorrichtung nach einem der Ansprüche 1 bis 6, dadurch gekennzeichnet, daß der Druckhalter (28, 50) einerseits und der Einlaufbereich des Bremsbackenhalters (21) andererseits an zwei über die Bremsscheibe (16) seitlich vorstehenden und auf gegenüberliegenden Seiten der Bremsscheibe (16) radial verschiebbaren Zunge (20) des Bremsbackenhebels (18) befestigt sind.

8. Bremsvorrichtung nach Anspruch 8, dadurch gekennzeichnet, daß die sich gegenüberliegenden Zungen (20) mittels einer Feder (29, 52) miteinander verspannt sind.

9. Bremsvorrichtung nach einem der Ansprüche 5 bis 8, dadurch gekennzeichnet, daß der Druckhalter (50) mit zwei sich gegenüberliegenden, mittels einer Feder (52) verspannten Haltestreifen (51) ausgesattet ist, die sich in Lösestellung mit dem Haltekonus (53) verspannen.

10. Bremsvorrichtung nach einem der Ansprüche 1 bis 9, dadurch gekennzeichnet, daß an dem Bremsbackenhebel (18) ein einen Schalter (37) des Antriebsmotors (14) schaltender Schaltstift (36) befestigt ist.

11. Bremsvorrichtung nach einem der Ansprüche 1 bis 10, dadurch gekennzeichnet, daß zwei sich gegenüberliegende Bremsbackenhebel (18) mit sich kreuzenden, gelenkig ineinandergreifenden Haltestreifen (64, 67) vorgesehen sind, die sich mit beweglichen Schrägflächen sowohl in Bremsstellung als auch in Lösestellung der Bremsscheibe (16) an festen Schrägflächen (69, 71) einlegen.

12. Bremsvorrichtung nach einem der Ansprüche 1 bis 11, dadurch gekennzeichnet, daß die Bremsbackenhebel (18) in ihrem Schwerpunktbereich mittels eines zweischenkligen Einhängewinkels (101) und daran gelagerten Druckfedern (105) abgefedert gelagert sind.

13. Bremsvorrichtung nach einem der Ansprüche 1 bis 12, dadurch gekennzeichnet, daß die Bremsvorrichtung mit einer Verriegelungseinrichtung für einen Deckel (13) eines Haus- und Gartengerätes oder dergleichen zusammenwirkt, wobei das Lösen der Bremsbacken (19) durch Ziehen einer Drahtseele (30) eines mit einem Ende am Deckel (13) festgelegten Bowdenzuges (31) mittels einer entgegen der Arbeitsdrehrichtung des Antriebsmotors (14) laufenden Teildrehung erfolgt.

## Claims

1. A braking device for an electric motor (14) for domestic and garden appliances or similar
- having a brake disc (16),
which is attached to a shaft (15) of the electric motor (14),
- having at least one brake shoe (19),
which is disposed substantially parallel to the surface of the brake disc (16) on a brake shoe lever (18) which can be swivelled about a swivel axis (17) fixed to a motor housing (10) and perpendicular to the surface of the brake disc (16), and
which can be placed on the brake disc (16) by a movement occurring in the axial direction of the shaft (15);
**characterised**
- in that outside the brake disc (16) is disposed a stationary frame (23), which comprises a guide part having a leading curve (22), and
- in that the brake shoe lever (18) comprises a brake shoe support (21) having a bent inlet region, which runs into the leading curve (22) of the frame (23) to brake the brake disc (16).

2. A braking device according to Claim 1,
**characterised in that** the leading curve (22) of the guide part and the inlet region of the brake shoe support (21) extend at an obtuse angle with respect to a perpendicular to the brake disc (16).

3. A braking device according to one of Claims 1 or 2,
**characterised in that** the guide part with its leading curve (22) is provided securely in the interior (24) of the frame (23) fixed to the motor housing (10).

4. A braking device according to one of Claims 1 to 3,
**characterised in that** a retention cone (34), which interacts with a pressure maintaining device (28) movable in the frame (23) and attached to the brake shoe lever (18), is disposed on the frame (23) at a distance from the leading curve (22) by fixing the brake shoe lever (18) in the released position of the brake shoes (19).

5. A braking device according to claim 4,
**characterised in that** the pressure maintaining device (28, 50) which can move in the interior (24) of the fixed frame (23) interacts with a retention cone (25), which is fastened to a Bowden cable (31) of an actuating device and which is placed between retention curves (27) of the pressure maintaining device (28) spring-mounted by means of a spring (29).

6. A braking device according to one of Claims 4 or 5,
**characterised in that** the pressure maintaining device (28, 50) is clamped with ends (33) protruding at the retention curves (27, 51) in a groove (35) between a conical face (34) protruding in the frame (23) and the stationary frame (23).

7. A braking device according to one of claims 1 to 6,
**characterised in that** the pressure maintaining device (28, 50) on the one hand and the inlet region of the brake shoe support (21) on the other hand are attached to two tongues (20) of the brake shoe lever (18), which protrude laterally over the brake disc (16) and are radially displaceable on opposite sides of the brake disc (16).

8. A braking device according to claim 8,
**characterised in that** the opposite tongues (20) are braced with respect to one another by means of a spring (29, 52).

9. A braking device according to one of claims 5 to 8,
**characterised in that** the pressure maintaining device (50) is equipped with two opposite retaining strips (51) braced by means of a spring (52), and are braced with the retention cone (53) in the released position.

10. A braking device according to one of claims 1 to 9,
**characterised in that** to the brake shoe lever (18) is attached an operating pin (36) operating a switch (37) of the driving motor (14).

11. A braking device according to one of claims 1 to 10,
**characterised in that** two opposite brake shoe levers (18) are provided with intersecting, retaining strips (64, 67) engaging in one another in articulated fashion, which with moveable inclined faces are placed on fixed inclined faces (69, 71) both in the braking position and also in the released position of the brake disc (16).

12. A braking device according to one of Claims 1 to 11,
**characterised in that** in the region of their centre of gravity the brake shoe levers (18) are spring-mounted by means of a two-limbed suspended angle steel (101) and compression springs (105) fixed thereto.

13. A braking device according to one of Claims 1 to 12,
**characterised in that** the braking device interacts with a locking mechanism for a lid (13) of a domestic or garden appliance, whereby the release of the brake shoes (19) is performed by pulling a wire core (30) of a Bowden cable (31) fixed with one end on the lid (13) by means of a partial rotation extending in the direction opposite the direction of rotation of the driving motor (14).

## Revendications

1. Dispositif de freinage pour un moteur d'entraînement électrique (14) pour appareils ménagers et de jardinage ou similaires
- avec un disque de frein (16) qui est fixé sur un arbre (15) du moteur d'entraînement électrique (14),
- avec au moins un sabot de frein (19)
qui est disposé environ parallèlement à la surface du disque de frein (16), sur un lever de sabot de frein (18) pouvant pivoter sur un axe de pivotement (17) fixé à un carter de moteur (10) et s'étendant perpendiculairement à la surface du disque de frein (16), et
qui peut être appliqué contre le disque de frein (16) par un mouvement se réalisant dans le sens axial de l'arbre (15),
caractérisé en ce
- qu'à l'extérieur du disque de frein (16) est disposé un bâti (23) fixe qui présente un élément de guidage à courbe d'enraiement (22), et
- que le levier de sabot de frein (18) présente un porte-sabot de frein (21) à zone d'entrée recourbée qui pénètre dans la courbe d'enraiement (22) du bâti (23) pour le freinage du disque de frein (16).

2. Dispositif de freinage suivant la revendication 1, caractérisé en ce que la courbe d'enraiement (22) de l'élément de guidage et la zone d'entrée du porte-sabot de frein (21) s'étendent, chacune, suivant un angle obtus par rapport à une verticale au disque de frein (16).

3. Dispositif de freinage suivant l'une des revendications 1 ou 2, caractérisé en ce que l'élément de guidage avec sa courbe d'enraiement (22) est prévu fixe dans l'espace intérieur (24) du bâti (23) fixé au carter de moteur (10).

4. Dispositif de freinage suivant l'une des revendications 1 à 3, caractérisé en ce que, pour le blocage du levier de sabot de frein (18) en position de dégagement du sabot de frein (19), est disposé sur le bâti (23), à distance de la courbe d'enraiement (22), un cône de retenue (34) qui coopère avec un support de pression (28) fixé sur le lever de sabot de frein (18) et mobile dans le bâti (23).

5. Dispositif de freinage suivant la revendication 4, caractérisé en ce que le support de pression (28, 50) mobile dans l'espace intérieur (24) du bâti fixe (23) coopère avec un cône de retenue (25) qui est fixé à un câble Bowden (31) d'un dispositif d'actionnement et qui vient se placer entre les courbes de retenue (27) du support de pression (28) soumises à l'action d'un ressort (29).

6. Dispositif de freinage suivant l'une des revendications 4 ou 5, caractérisé en ce que le support de pression (28, 50) s'engage par des extrémités (33) en saillie par rapport aux courbes de retenue (27, 51), dans une rainure (35) entre une surface de cône (34), en saillie dans le bâti (23), et le bâti fixe (23).

7. Dispositif de freinage suivant l'une des revendications 1 à 6, caractérisé en ce que le support de pression (28, 50), d'une part, et la zone d'entrée du porte-sabot de frein (21), d'autre part, sont fixés sur deux languettes (20) du levier de sabot de frein (18) en saillie latérale par rapport au disque de frein (16) et déplaçables radialement sur les côtés opposés du disque de frein (16).

8. Dispositif de freinage suivant la revendication 7, caractérisé en ce que les languettes (20) opposées sont sollicitées l'une vers l'autre à l'aide d'un ressort (29, 52).

9. Dispositif de freinage suivant l'une des revendications 5 à 8, caractérisé en ce que le support de pression (50) est muni de deux bandes de retenue (51) opposées, sollicitées par un ressort (52), et qui, en position de dégagement, sont écartées avec le cône de retenue (53).

10. Dispositif de freinage suivant l'une des revendications 1 à 9, caractérisé en ce que sur le levier de sabot de frein (18) est fixée une goupille de commande (36) actionnant un interrupteur (37) du moteur d'entraînement (14).

11. Dispositif de freinage suivant l'une des revendications 1 à 10, caractérisé en ce que deux leviers de sabot de frein (18) opposés sont pourvus de bandes de retenue (64, 67) qui se croisent et s'emboîtent l'une dans l'autre de manière articulée et qui, par des surfaces inclinées mobiles, viennent se placer contre des surfaces obliques fixes (69, 71), tant en position de freinage qu'en position de dégagement du disque de frein (16).

12. Dispositif de freinage suivant l'une des revendications 1 à 11, caractérisé en ce que le levier de sabot de frein (18) est monté élastiquement, dans la zone de son centre de gravité, à l'aide d'une équerre de suspension à deux branches (101) et de ressorts de pression (105) montés sur celle-ci.

13. Dispositif de freinage suivant l'une des revendications 1 à 12, caractérisé en ce que le dispositif de freinage coopère avec un dispositif de verrouillage pour un couvercle (13) d'un appareil ménager ou de jardinage ou similaire, le dégagement des sabots de frein (19) s'effectuant eu tirant sur une âme de câble Bowden (31) fixé par une extrémité au couvercle (13), à l'aide d'une rotation partielle en direction contraire à celle de la rotation de fonctionnement du moteur d'entraînement (14).
